# FASCICULE DE BREVET EUROPEEN

(11) **EP 0 856 688 B1**
(45) Date de publication et mention de la délivrance du brevet: **02.04.2003**
(21) Numéro de dépôt: 98400005.9
(22) Date de dépôt: 05.01.1998
(51) Int. Cl.: F16J 15/02

(54) **Joint d'étanchéité pour fluide haute pression et outil de pose pour un tel joint d'étanchéité**
Hochdruckdichtung und Setzwerkzeug für eine solche Dichtung
Sealing for high pressure fluid and fitting tool for such a seal

(30) Priorité: 31.01.1997 FR 9701112
(43) Date de publication de la demande: 05.08.1998
(73) Titulaire: AUTOMOBILES PEUGEOT, 75116 Paris (FR); AUTOMOBILES CITROEN, 92200 Neuilly-sur-Seine (FR)
(72) Inventeur: Chatain, Daniel, 91120 Palaiseau (FR)
(74) Mandataire: Lanceplaine, Jean-Claude

(56) Documents cités:
- EP-A- 0 597 819
- DE-A- 2 524 844
- DE-U- 8 026 902
- GB-A- 2 050 507
- US-A- 3 603 618
- US-A- 5 566 983

## Description

La présente invention a pour objet un joint d'étanchéité pour un fluide haute pression entre deux pièces ménageant entre elles un jeu.

La présente invention a également pour objet un outil de pose d'un tel joint d'étanchéité.

Les joints d'étanchéité pour fluides haute pression sont utilisés dans de nombreuses applications et par exemple dans le circuit permettant d'amener de l'huile sous pression entre le bloc cylindre d'un moteur à combustion interne de véhicules automobiles et le carter des arbres d'équilibrage de ce moteur.

Pour diminuer les vibrations des moteurs à combustion interne, il est connu d'utiliser un dispositif comportant deux arbres d'équilibrage parallèles au vilebrequin et entraînés en rotation par celui-ci, l'un des arbres d'équilibrage tournant dans le même sens que ce vilebrequin et l'autre desdits arbres d'équilibrage tournant en sens inverse.

De manière classique, l'entraînement est assuré par une couronne dentée montée sur le vilebrequin et qui engrène avec un pignon menant.

Par ailleurs, les deux arbres d'équilibrage sont disposés dans un carter, réalisé en deux parties, situé au-dessous du vilebrequin et fixé au-dessous du bloc cylindre par des organes de fixation appropriés.

Le jeu existant entre la couronne et le pignon menant est réglé par une cale interposée au niveau des organes de fixation.

Cette cale permet de compenser les cumuls de tolérance entre les diverses pièces de l'ensemble qui sont une source de bruit, tout en conservant un jeu de fonctionement pour ces pièces.

D'autre part, il est nécessaire de lubrifier les arbres d'équilibrage.

Pour cela, de l'huile sous pression est amenée dans le carter des arbres d'équilibrage par l'intermédiaire d'un conduit percé en partie dans le bloc cylindre.

Ce conduit doit donc passer du bloc cylindre au carter des arbres d'équilibrage et, compte tenu du jeu de fonctionnement, assurer la continuité entre ces deux pièces.

Ainsi, un joint est interposé entre les deux pièces au niveau du conduit de passage du fluide sous pression, qui assure à la fois l'étanchéité et le rattrapage du jeu entre ces pièces.

L'invention a donc pour objet un joint d'étanchéité pour fluide haute pression entre deux pièces ménageant entre elles un jeu, l'une des pièces présentant un logement de réception du joint et l'autre desdites pièces comportant une surface de contact avec ledit joint, caractérisé en ce qu'il est formé, d'une part, par un manchon cylindrique en matériau élastomère muni d'un canal axial de passage du fluide et, d'autre part, par une armature d'emmanchement dans le logement, entourant ledit manchon sur une partie de sa hauteur pour ménager une portion libre de matériau élastomère d'appui du manchon sur la surface de contact, ledit manchon étant relié à l'armature par l'une de ses extrémités opposée à celle en appui sur ladite surface de contact de la pièce correspondante.

Selon d'autres caractéristiques de l'invention :
- l'armature présente à son extrémité reliée au manchon une collerette pénétrant dans ledit manchon,
- le canal axial du manchon comporte, à son extrémité destinée à venir en appui sur la surface de contact de la pièce correspondante, une portion conique évasée vers ladite extrémité.

L'invention a également pour objet un outil de pose d'un tel joint d'étanchéité, caractérisé en ce qu'il comprend un corps muni d'une tige de diamètre légèrement supérieur au diamètre du canal axial et comportant,d'une part, à la base de ladite tige, un évidement circulaire de réception de la portion correspondante de matériau élastomère du manchon et, d'autre part, autour de cet évidement, un bord d'appui sur l'extrémité libre de l'armature.

Les caractéristiques et avantages de l'invention apparaîtront au cours de la description qui va suivre, donnée à titre d'exemple et faite en référence aux dessins annexés, sur lesquels :
- la Fig. 1 est une vue partielle en coupe d'un ensemble bloc cylindre et carter des arbres d'équilibrage muni d'un joint d'étanchéité conforme à l'invention,
- la Fig. 2 est une vue en perspective du joint d'étanchéité conforme à l'invention,
- les Figs. 3A à 3D sont des vues schématiques en coupe montrant les différentes phases de pose du joint d'étanchéité avec un outil conforme à l'invention.

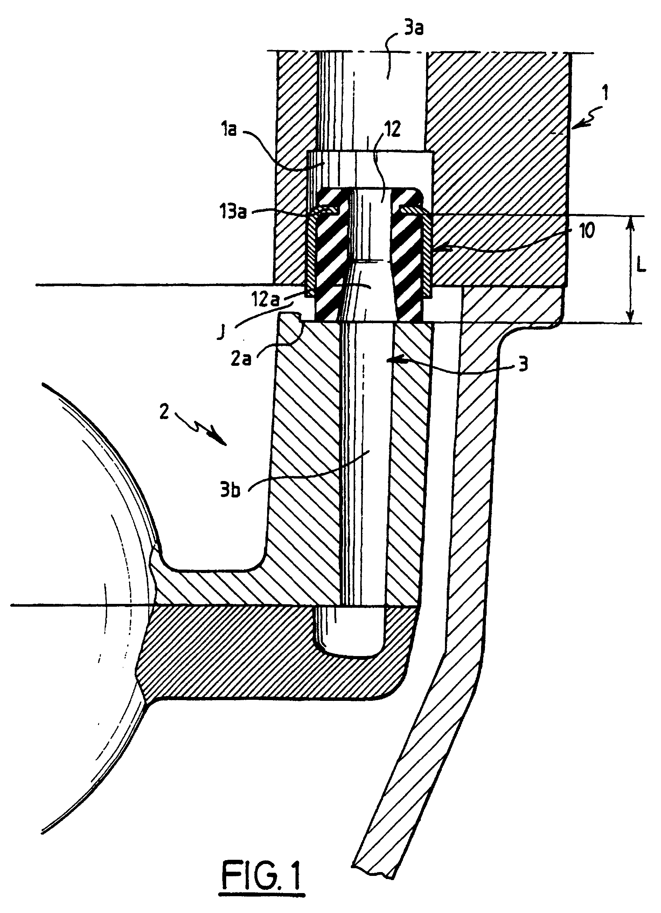

Sur la Fig. 1, on a représenté schématiquement une partie d'un bloc cylindre 1 et une partie d'un carter 2 des arbres d'équilibrage, non représentés, d'un moteur à combustion interne de véhicule automobile.

Pour assurer la lubrification de ces arbres d'équilibrage, un fluide à haute pression comme par exemple de l'huile est amené dans le carter 2 par l'intermédiaire d'un conduit désigné dans son ensemble par la référence 3.

Ce conduit 3 comporte une portion 3a ménagée dans le bloc cylindre 1 et une portion 3b ménagée dans le carter 2.

Ainsi que représenté à la Fig. 1, un jeu J est ménagé entre le bloc cylindre 1 et le carter 2 au niveau du passage du conduit 3 entre ces deux pièces.

Afin d'assurer la continuité du conduit 3 entre le bloc cylindre 1 et le carter 2 et conserver le jeu J de fonctionnement un joint d'étanchéité 10 est interposé entre ces deux pièces.

A cet effet, l'une des pièces et notamment le bloc cylindre 1 comporte, dans l'axe du conduit 3, un logement la de réception du joint 10 et l'autre pièce c'est à dire le carter 2, comporte une surface de contact 2a avec ledit joint d'étanchéité 10.

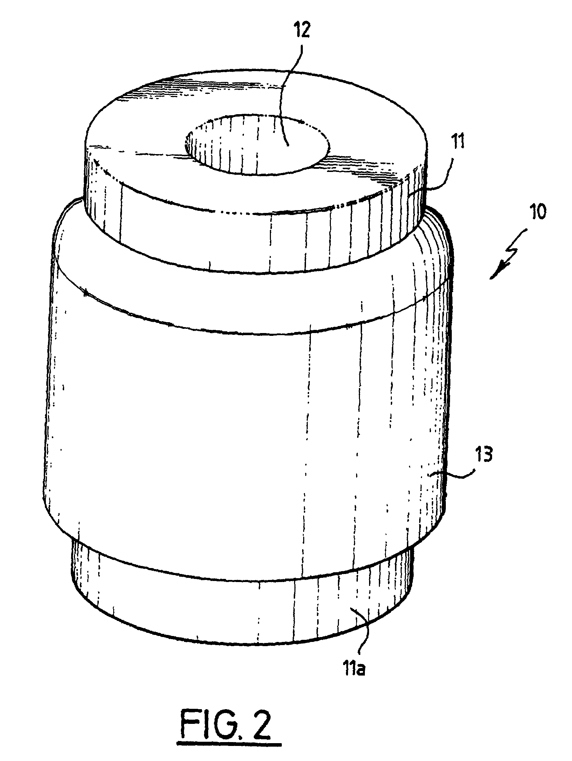

Comme représenté sur les Figs. 1 et 2, le joint d'étanchéité 10 est formé par un manchon cylindrique 11 en matériau élastomère muni d'un canal axial 12 de passage du fluide entre les deux portions 3a et 3b du conduit 3.

Le joint d'étanchéité 10 est également formé par une armature 13 d'emmanchement dans le logement la et entourant le manchon 11 sur une partie de sa hauteur.

Ainsi, l'armature 13 ménage une portion libre 11a de matériau élastomère d'appui du manchon 11 sur la surface de contact 2a.

Comme représenté plus particulièrement à la Fig. 1, le manchon 11 est relié à l'armature 13 uniquement par l'une de ses extrémités opposée à celle en appui sur la surface 2a du carter 2.

Pour cela, l'armature 13 présente, à son extrémité reliée au manchon 11, une collerette 13a pénétrant dans ledit manchon 11.

De ce fait, le reste de l'armature 13 est libre par rapport au manchon 11 de façon à ne pas gêner la compression du matériau élastomère constituant ce manchon 11.

La compressibilité maximale du manchon 11 est déterminée par la longueur L déterminée par la longueur entre la collerette 13a de liaison de l'armature 13 sur le manchon 11 et l'extrémité de ce manchon 11 destinée à venir en appui sur la surface de contact 2a du carter 2, comme représenté à la Fig. 1.

L'armature 13 assure l'étanchéité au niveau du bloc cylindre 1 par emmanchement à force de cette armature 13 dans le logement la tandis que le manchon 11 en matériau élastomère assure l'étanchéité avec le carter 2 des arbres d'équilibrage.

Après montage du joint d'étanchéité 10 dans le logement la, comme on le verra ultérieurement, la portion libre 11a du manchon 11 vient en appui sur la surface de contact 2a du carter 2 pour assurer, par compression, l'étanchéité entre ce carter 2 et le bloc cylindre 1.

Par ailleurs, le canal axial 12 du manchon 11 comporte, à son extrémité destinée à venir en appui sur la surface de contact 2a, une portion conique 12a évasée vers ladite extrémité, ainsi que représenté sur la Fig. 1.

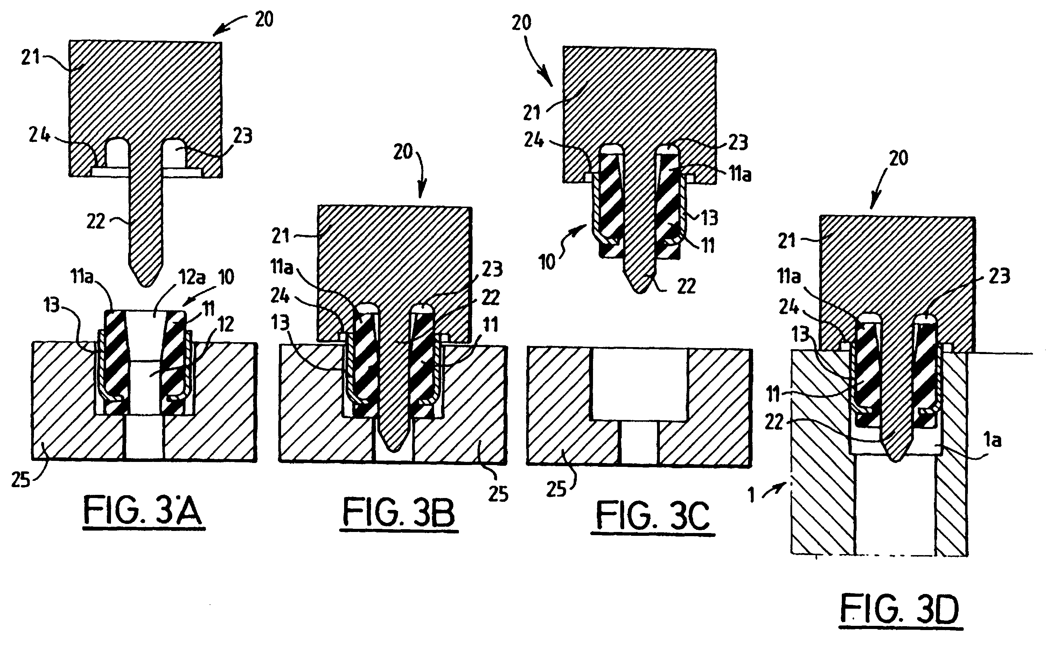

Le joint d'étanchéité est mis en place au moyen d'un outil désigné dans son ensemble par la référence 20 et représenté à la Fig. 3A.

Cet outil 20 comprend un corps 21 muni d'une tige 22 dont le diamètre est légèrement supérieur au diamètre du canal axial 12 du manchon 11.

De plus, le corps 21 comporte, d'une part, au niveau de la base de la tige 22, un évidement circulaire 23 de réception de la portion 11a de matériau élastomère du manchon 11 et, d'autre part, autour de cet évidement 23, un bord 24 d'appui sur l'extrémité libre de l'armature 13.

Ainsi que représenté 3A, le joint d'étanchéité 10 est tout d'abord placé dans une plaque support 25 de telle manière que la portion 11a destinée à venir en appui sur la surface de contact 2a se présente vers le haut.

Ensuite, la tige 22 de l'outil 20 est emmanchée progressivement dans le canal 12 du manchon 11.

La portion conique 12a ménagée dans ce canal 12 permet à la tige 22 et de ce fait à l'outil 20 de s'autocentrer sur le joint d'étanchéité 10.

Ainsi et comme représenté à la Fig. 3B, la portion 11a du manchon 11 vient se positionner dans l'évidement 23 du corps 21 et le bord 24 vient s'appuyer sur l'extrémité libre de l'armature 13.

En fin de course, l'outil 20 saisit le joint d'étanchéité 10, comme représenté à la Fig. 3C, pour le présenter sur la pièce de réception, c'est à dire sur le bloc cylindre 1.

Comme représenté à la Fig. 3D, la tige 22 de l'outil 20 s'engage dans le logement la du bloc cylindre 1 pour placer le joint d'étanchéité 10 par emmanchement à force de 1 'armature 13 dans ce logement 1a.

La cote de dépassement de la portion 11a de matériau élastomère du manchon 11 est assurée lorsque le corps 21 de l'outil 20 vient en butée sur la face du bloc cylindre 1, comme représenté à la Fig. 3D.

Par conséquent, la cote de montage du joint d'étanchéité 10 dans logement la du bloc cylindre 1 est obtenue sans aucun réglage préalable.

Ensuite, l'outil 20 est extrait du joint d'étanchéité 10.

De part sa conception, le joint d'étanchéité selon l'invention permet d'assurer le passage du fluide sous pression entre deux pièces, tout en compensant le jeu existant à la jonction de ces pièces.

Le joint d'étanchéité selon l'invention peut être utilisé dans tout circuit hydraulique pour assurer la continuité de ce circuit entre deux pièces présentant entre elles un jeu fonctionnel.

## Revendications

1. Joint d'étanchéité (10) pour fluide haute pression entre deux pièces (1, 2) ménageant entre elles un jeu, l'une (1) des pièces présentant un logement (1a) de réception du joint (10) et l'autre (2) desdites pièces comportant une surface de contact (2a) avec ledit joint (10), **caractérisé en ce qu'**il est formé, d'une part, par un manchon (11) cylindrique en matériau élastomère muni d'un canal axial (12) de passage du fluide et, d'autre part, par une armature (13) d'emmanchement dans le logement (1a), entourant ledit manchon (11) sur une partie de sa hauteur pour ménager une portion libre (11a) de matériau élastomère d'appui du manchon (11) sur la surface de contact (2a), ledit manchon (11) étant relié à l'armature (13) par l'une de ses extrémités opposée à celle en appui sur ladite surface de contact (2a) de la pièce (2) correspondante.

2. Joint d'étanchéité selon la revendication 1, **caractérisé en ce que** l'armature (13) présente à son extrémité reliée au manchon (11) une collerette (13a) pénétrant dans ledit manchon (11).

3. Joint d'étanchéité selon la revendication 1, **caractérisé en ce que** le canal axial (12) du manchon (11) comporte, à son extrémité destinée à venir en appui sur la surface de contact (2a) de la pièce (2) correspondante, une portion (12a) conique évasée vers ladite extrémité.

4. Outil de pose (20) d'un joint d'étanchéité (10) selon l'une quelconque des revendications précédentes, **caractérisé en ce qu'**il comprend un corps (21) muni d'une tige (22) de diamètre légèrement supérieur au diamètre du canal axial (12) du manchon (11) et comportant, d'une part, à la base de ladite tige (22), un évidement circulaire (23) de réception de la portion (11a) correspondante de matériau élastomère du manchon (11) et, d'autre part, autour de cet évidement (23), un bord (24) d'appui sur l'extrémité libre de l'armature (13).

## Claims

1. Seal (10) for high pressure fluid between two parts (1, 2) allowing a play between them, one of the parts (1) having a housing (1a) for receiving the seal (10) and the other of the said parts (2) having a contact surface (2a) with the said seal (10), **characterised in that** it is formed, firstly, by a cylindrical sleeve (11) of elastomeric material provided with an axial fluid passage channel (12) and, secondly, by a coupling armature (13) in the housing (1a) surrounding the said sleeve (11) on one part of its height to provide a free portion (11a) of elastomeric material which supports the sleeve (11) on the contact surface (2a), the said sleeve (11) being linked to the armature (13) by one of its ends opposite to the support end on the said contact surface (2a) of the corresponding part (2).

2. Seal according to claim 1, **characterised in that** the armature (13) has, at its end linked to the sleeve (11) a flange (13a) which penetrates the said sleeve.

3. Seal according to claim 1, **characterised in that** the axial channel (12) of the sleeve (11) comprises, at its end intended to engage with the contact surface (2a) of the corresponding part, a conical portion (12a) which widens out towards the said end.

4. Fitting tool (20) for a seal (10) according to any of the previous claims, **characterised in that** it comprises a body (21) provided with a rod (22) of a slightly greater diameter than that of the axial channel (12) of the sleeve (11) and comprising, firstly, at the bottom of the said rod (22), a circular hollow (23) for receiving the corresponding portion (11a) of elastomeric material of the sleeve (11) and, secondly, around this hollow (23), a support edge (24) on the free end of the armature (13).

## Patentansprüche

1. Dichtung (10) für Hochdruckfluid zwischen zwei Teilen (1, 2), zwischen denen ein Spiel besteht, wobei eines (1) der Teile eine Aussparung (1a) zur Aufnahme der Dichtung (10) und das andere (2) der Teile eine Kontaktfläche (2a) mit der Dichtung (10) aufweist, **dadurch gekennzeichnet, daß** sie einerseits aus einer zylindrischen Buchse (11) aus einem Elastomer besteht, die mit einem axialen Kanal (12) für den Durchgang des Fluids versehen ist, und andererseits aus einer Garnitur (13) zum Einstecken in die Aussparung (1a), die die Buchse (11) auf einem Teil ihrer Höhe umgibt, um einen freien Elastomerteil (11a) zur Auflage der Buchse (11) auf der Kontaktfläche (2a) auszusparen, wobei die Buchse (11) mit der Garnitur (13) über eines ihrer Enden verbunden ist, das dem auf der Kontaktfläche (2a) des entsprechenden Teils (2) aufliegenden Ende entgegengesetzt ist.

2. Dichtung nach Anspruch 1, **dadurch gekennzeichnet, daß** die Garnitur (13) an ihrem mit der Buchse (11) verbundenen Ende einen Kragen (13a) aufweist, der in die Buchse (11) eindringt.

3. Dichtung nach Anspruch 1, **dadurch gekennzeichnet, daß** der axiale Kanal (12) der Buchse (11) an ihrem Ende, das dazu bestimmt ist, an der Kontaktfläche (2a) des entsprechenden Teils (2) zur Anlage zu kommen, einen auf dieses Ende zu ausgeweiteten konischen Bereich (12a) aufweist.

4. Werkzeug (20) zum Setzen einer Dichtung (10) nach einem der vorhergehenden Ansprüche, **dadurch gekennzeichnet, daß** es einen Körper (21) aufweist, der mit einer Stange (22) versehen ist, deren Durchmesser etwas größer als der des axialen Kanals (12) der Buchse (11) ist, und einerseits an der Basis der Stange (22) eine kreisförmige Aussparung (23) zur Aufnahme des entsprechenden Elastometeils (11a) der Buchse (11) und andererseits um diese Aussparung (23) herum einen Rand (24) zur Auflage auf dem freien Ende der Garnitur (13) aufweist.
